# EUROPÄISCHE PATENTSCHRIFT

(11) **EP 1 338 809 B1**
(45) Veröffentlichungstag und Bekanntmachung des Hinweises auf die Patenterteilung: **26.04.2006**
(21) Anmeldenummer: 02100186.2
(22) Anmeldetag: 25.02.2002
(51) Int. Cl.: F16C 3/14, F16C 33/74, F01M 5/02

(54) **Dichtungsvorrichtung für ein Wellenlager**
Sealing means for a shaft bearing
Etanchéité pour un palier d'arbre

(43) Veröffentlichungstag der Anmeldung: 27.08.2003
(73) Patentinhaber: Ford Global Technologies, LLC, Dearborn, MI 48126 (US)
(72) Erfinder: Bertram, Ulrich, 50129, Bergheim (DE)
(74) Vertreter: Drömer, Hans-Carsten

(56) Entgegenhaltungen:
- BE-A- 471 392
- FR-A- 2 674 905

## Beschreibung

Die Erfindung betrifft ein Zwischenelement für ein Wellenlager, wobei das Welle n-lager eine Lagerschale mit einer Radiallagerfläche und zwei in entgegengesetzte Richtungen weisenden Axiallagerflächen aufweist. Femer betrifft sie ein Wellenlager mit einem derartigen Zwischenelement.

Wellenlager dienen dazu, eine Welle drehbeweglich zu lagem. Stellvertretend sei diesbezüglich nachfolgend ein Wellenlager für die Kurbelwelle eines Kraftfahrzeuges betrachtet. Für die Ausbildung eines derartigen Wellenlagers ist es zum Beispiel aus der US Re.32,764 bekannt, die Welle mittels halbzylindrischer Lagerschalen am Kurbelwellengehäuse beziehungsweise Motorblock zu lagern, wobei eine Lagerschalenhälfte eine Radiallagerfläche sowie senkrecht dazu zwei Axiallagerflächen aufweisen, welche die Welle in radialer beziehungsweise axialer Richtung stützen. Die andere Lagerschalenhälfte besteht nur aus einer Halbschale.

Die Schmierung eines Wellenlagers erfolgt in der Regel mittels ÖI, welches den Radiallagerflächen zugeführt wird und sich von dort auf die Axiallagerflächen ausbreitet. Dabei kann jedoch oft beobachtet werden, daß das Öl abfließt und in das Auffangbecken des Kurbelwellengehäuses tropft, ohne die Axiallagerflächen von Lagerschale und Kurbelwelle ausreichend geschmiert zu haben. Dieser Effekt tritt vornehmlich dann ein, wenn die Lagerschale verhältnismäßig schmal ist und daher ein größerer Spalt zwischen Lagerschale und Kurbelwelle entsteht. Insbesondere beim Start des Motors nach einer längeren Ruhepause ist in diesen Fällen während der ersten Sekunden kein Öl an den Axiallagerflächen vorhanden, was zu einem hohen Verschleiß und in der Folge zu einem Ausfall des Motors führen kann.

Vor diesem Hintergrund war es Aufgabe der vorliegenden Erfindung, ein Wellenlager bereitzustellen, welches mit einfachen und kostengünstigen Mitteln eine Schmierung der Axiallagerflächen sicherstellt, und zwar insbesondere auch bei einem Start nach längerem Stillstand.

Diese Aufgabe wird durch ein Zwischenelement mit den Merkmalen des Anspruchs 1 sowie durch ein Wellenlager mit den Merkmalen des Anspruchs 9 gelöst.

Vorteilhafte Ausgestaltungen sind in den Unteransprüchen enthalten.

Die Erfindung betrifft somit ein Zwischenelement für ein Wellenlager, wobei das Wellenlager eine Lagerschale mit einer Radiallagerfläche und zwei in entgegengesetzte Richtungen weisende Axiallagerflächen aufweist. Ein derartiges Wellenlager findet sich typischerweise bei der Lagerung einer Kurbelwelle in einem Kraftfahrzeug. Das Zwischenelement ist dadurch gekennzeichnet, daß es zwei Flügelelemente aufweist, welche bei der Montage des Zwischenelementes jeweils unter einer Axiallagerfläche einer Lagerschale des Wellenlagers angeordnet werden können.

Die typischerweise flachen Flügelelemente des Zwischenelementes können somit den Zwischenraum zwischen dem unteren Lagerschalenträger und der Axiallagergegenfläche der Kurbelwelle ausfüllen. Hierdurch sorgen sie dafür, daß in diesen Bereich einfließendes Schmieröl nicht ungenutzt abfließt, sondern gut und gleichmäßig auf die Kurbelwellenlagerflächen verteilt wird.

Das Zwischenelement besteht vorzugsweise aus einem Material, welches für die zu lagernde Welle nicht abrasiv ist, um bei einem Kontakt mit der Welle diese nicht zu beschädigen. Insbesondere kann das Zwischenelement aus einem Kunststoff wie Polyamid (PA) hergestellt sein, welcher gegenüber dem Metall der Welle beziehungsweise der Lagerschale nachgiebig und darüber hinaus sehr kostengünstig ist.

Gemäß einer bevorzugten Ausgestaltung können die beiden Flügelelemente des Zwischenelementes durch einen Verbindungssteg miteinander verbunden sein. Der Verbindungssteg sorgt für die richtige Beabstandung der Flügelelemente und ermöglicht eine leichte Handhabung des Zwischenelementes.

Bei einer Weiterbildung der zuletzt genannten Ausführungsform sind die Flügelelemente des Zwischenelementes ausgehend vom Verbindungssteg einander zugeneigt. Zusätzlich oder alternativ können die Flügelelemente auch mit zunehmendem radialen Abstand von der Lagerachse eines Wellenlagers, in das sie eingebaut werden, dünner werden. Beide Merkmale, die Neigung der Flügelelemente beziehungsweise die Veränderung ihrer Dicke, korrespondieren mit einer häufig anzutreffenden Formgebung von Lagerschalenträgern, welche durch deren Herstellung im (Druck-)Gußverfahren und die dabei erforderlichen Formschrägen bedingt ist. Bei derartigen Lagerschalenträgern sind die Axiallagerflächen nicht exakt parallel zueinander, sondern mehr oder weniger stark geneigt. Diese Neigung führt zu einer Abstandsveränderung zwischen den Axiallagerflächen von Lagerschale und Welle, welche durch die oben beschriebene Ausgestaltung des Zwischenelementes vorteilhafterweise kompensiert wird.

Das Zwischenelement kann femer Abstützglieder enthalten, über welche dieses an Gehäuseteilen eines Wellenlagers abgestützt werden kann. Derartige Abstützglieder können zum Beispiel fingerförmig und/oder federnd ausgebildet sein. Mit ihrer Hilfe kann das Zwischenelement leicht in den Zwischenraum zwischen Lagerschale und Welle eingesetzt und dort an seinem Platz gehalten werden.

Weiterhin ist es vorteilhaft, wenn das Zwischenelement Schmiermittelnuten und/oder Schmiermitteltaschen für eine Verteilung und Bevorratung von Schmiermittel aufweist. Derartige Schmiermittelnuten/-taschen können insbesondere in den Flügelelementen ausgebildet sein.

Wie bereits erwähnt, kann das Zwischenelement insbesondere für eine Verwendung zur Lagerung der Kurbelwelle einer Brennkraftmaschine dimensioniert und eingerichtet sein.

Die Erfindung betrifft ferner ein Wellenlager enthaltend eine Lagerschale mit einer Radiallagerfläche und mindestens einer Axiallagerfläche, welches dadurch gekennzeichnet ist, daß es ein Zwischenelement enthält, das benachbart zur Axiallagerfläche der Lagerschale angeordnet ist. Ein derartiges Zwischenelement füllt somit einen eventuellen Leerraum zwischen unterem Lagerschalenträger und der Welle aus und stellt dadurch eine gleichmäßige Ölverteilung auf allen Lagerflächen sicher. Das Zwischenelement kann insbesondere in der vorstehend erläuterten Art ausgestaltet sein.

Im Folgenden wird die Erfindung mit Hilfe der Figuren beispielhaft näher erläutert. Es zeigen:
- Fig. 1: einen Schnitt durch das Wellenlager einer Kurbelwelle, in welchem ein erfindungsgemäßes Zwischenelement eingesetzt ist, und
- Fig. 2: das genannte Zwischenelement in einer Frontansicht.

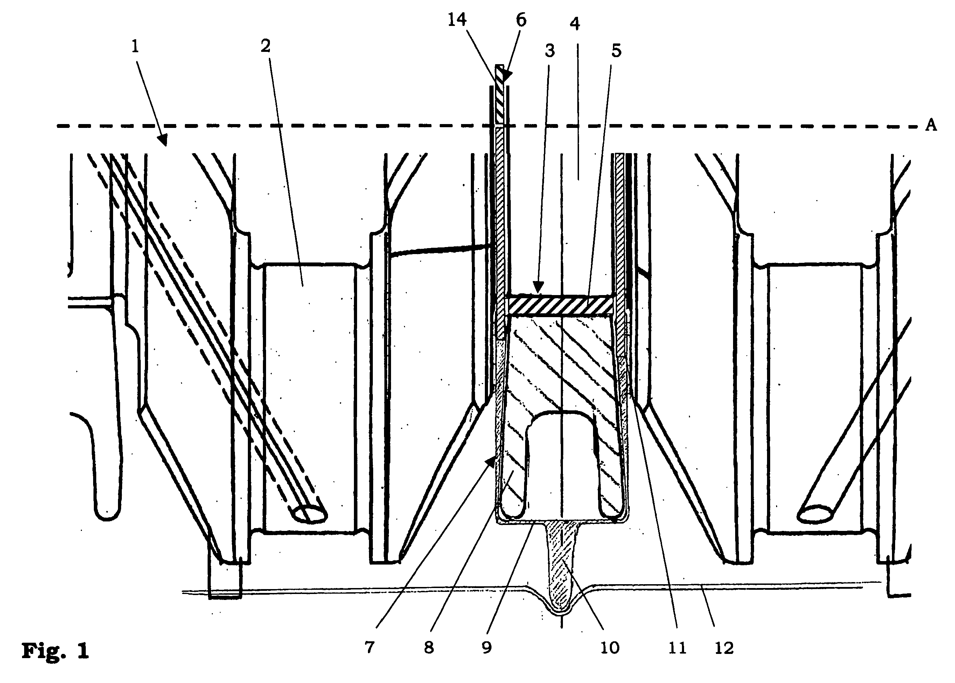

Figur 1 zeigt in einer Seitenansicht einen Ausschnitt aus einer Kurbelwelle 1, welche dazu dient, die Auf und ab Bewegung der Kolben einer Brennkraftmaschine in eine Drehbewegung umzusetzen. Die Kurbelwelle 1 enthält hierzu in bekannter Weise eine Folge von Kurbelzapfen 2, an denen Pleuelstangen (nicht dargestellt) gelagert sind, und Wellenzapfen 4, an denen die Kurbelwelle 1 drehbeweglich gelagert ist. Die letztgenannte Lagerung der Kurbelwelle erfolgt dabei mittels Lagerschalen 5, von denen eine in Figur 1 schematisch in einem Querschnitt dargestellt ist.

Die Lagerschalen 5 sind in der Regel halbzylinderförmig ausgebildet. Sie weisen eine dem Wellenzapfen 4 zugewandte Radiallagerfläche 3 auf. Zusätzlich enthält die obere Lagerschale zwei senkrecht zu der Radiallagerfläche in entgegengesetzte Richtungen weisende Axiallager14 mit den dann entstehenden Axiallagerflächen 6. An der Radiallagerfläche 3 wird die Kurbelwelle 1 in radialer Richtung mittels eines Ölfilmes gelagert, wobei das Schmieröl durch im Motorblock verlaufende Ölkanäle zugeführt wird. Das Öl verteilt sich vom Radialfende Ölkanäle zugeführt wird. Das Öl verteilt sich vom Radiallager ausgehend in der Regel über die Axiallagerflächen 6, bis es sich im Auffangbecken beziehungsweise Öltropfschild 12 am Boden des Kurbelwellengehäuses ansammelt.

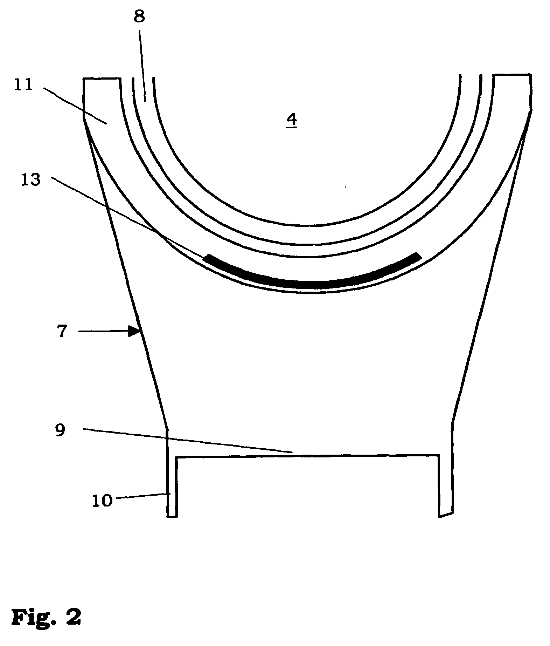

Bei herkömmlichen Wellenlagern kann es aufgrund eines im Rahmen der üblichen Toleranzen großen Abstandes zwischen dem unteren Lagerschalenträger 8 und den zugehörigen Axiallagerflächen 6 an der Kurbelwelle 1 dazu kommen, daß das Öl in das Auffangbecken abfließt, ohne eine wesentliche Benetzung bzw. Schmierung der Axiallagerflächen bewirkt zu haben. Um dies zu vermeiden, wird erfindungsgemäß die Einfügung eines Zwischenelementes 7 vorgeschlagen, welches zwei flächige Flügelelemente 11 aufweist, die an ihrem unteren Ende durch einen Verbindungssteg 9 miteinander verbunden sind. In Figur 2 ist eine Seitenansicht auf ein derartiges Zwischenelement 7 dargestellt, wobei in den Figuren 1 und 2 dieselben Bezugszeichen zu denselben Teilen gehören.

Das Zwischenelement 7 kann vorzugsweise aus einem kostengünstigen Kunststoff wie etwa Polyamid hergestellt sein. Es kann mit seinen beiden einander gegenüberstehenden Flügelelementen 11 in den Zwischenraum zwischen Lagerschalenträger 8 und Kurbelwelle 1 eingeclipst werden, was zum Beispiel auch im Wege einer Nachrüstung bei einer Wartung des Motors geschehen kann.

Um eine Minimalmenge an Schmieröl beim Starten des Motors bereitzustellen, kann mindestens eine kleine Öltasche 13 (Figur 2) in die Flügelelemente 11 des Zwischenelementes 7 integriert sein, in welcher bei einem Stillstand des Motors Öl bevorratet wird.

Am Verbindungssteg 9 des Zwischenelementes 7 können ein oder mehrere federnde Stäbe beziehungsweise Abstützglieder 10 angeordnet sein, über welche sich das Zwischenelement 7 am Öltropfblech 12 oder anderen Teilen in der Nachbarschaft abstützt, um auf diese Weise am vorgesehenen Ort gehalten zu werden.

Wie aus Figur 1 ersichtlich, weist der Lagerschalenträger 8 einen sich zur Achse A des Lagers hin verjüngenden Verlauf auf, welcher durch die notwendige Formschräge beim Gießen des Lagerschalenträgers 8 entsteht. Um diese Schräge zu kompensieren, sind die Flügelelemente 11 des Zwischenelementes 7 vorzugsweise derart ausgebildet, daß diese sich zur Achse A hin entsprechend verdicken. Femer können sie in Richtung der Achse A gesehen einander zugeneigt sein.

Das Zwischenelement 7 sorgt für eine Zentrierung des Lagerschalenträgers 8 zwischen den Kurbelwangen der Kurbelwelle 1. Während der ersten Stunden des Einsatzes eines derartigen Zwischenelementes 7 werden die Öltaschen 13, die auch als Zentriernuten wirken, eingeschliffen, so daß das notwendige axiale Spiel der Kurbelwelle 1 gewährleistet wird.

## Patentansprüche

1. Zwischenelement (7) für ein Wellenlager, wobei das Wellenlager eine Lagerschale (5) mit einer Radiallagerfläche (3) und zwei in entgegengesetzte Richtungen weisenden Axiallagerflächen (6) aufweist,
**dadurch gekennzeichnet, daß**
es zwei Flügelelemente (11) aufweist, welche jeweils unter einer Axiallagerfläche (6) eines Lagerschalenträgers (8) angeordnet werden können.

2. Zwischenelement (7) nach Anspruch 1,
**dadurch gekennzeichnet, daß**
dieses aus einem für die zu lagernde Welle (1) nicht abrasiven Material besteht, insbesondere aus einem Kunststoff.

3. Zwischenelement (7) nach Anspruch 1 oder 2,
**dadurch gekennzeichnet, daß**
die Flügelelemente (11) durch einen Verbindungssteg (9) miteinander verbunden sind.

4. Zwischenelement (7) nach Anspruch 3,
**dadurch gekennzeichnet, daß**
die Flügelelemente (11) ausgehend vom Verbindungssteg (9) einander zugeneigt sind.

5. Zwischenelement (7) nach einem der Ansprüche 1 bis 4,
**dadurch gekennzeichnet, daß**
die Flügelelemente (11) mit zunehmendem radialen Abstand von der Achse (A) eines Wellenlagers dünner werden.

6. Zwischenelement (7) nach einem der Ansprüche 1 bis 5,
**dadurch gekennzeichnet, daß**
dieses Abstützglieder (10) enthält, welche es an Gehäuseteilen (12) einer Brennkraftmaschine abstützen können.

7. Zwischenelement (7) nach einem der Ansprüche 1 bis 6,
**dadurch gekennzeichnet, daß**
dieses Schmiermitteltaschen (13) und/oder Schmiermittelnuten zur Bevorratung und/oder Verteilung von Schmiermittel aufweist.

8. Zwischenelement (7) nach einem der Ansprüche 1 bis 7,
**dadurch gekennzeichnet, daß**
dieses für die Verwendung an der Kurbelwelle (1) einer Brennkraftmaschine dimensioniert und eingerichtet ist.

9. Wellenlager enthaltend einen Lagerschalenträger (8),
**dadurch gekennzeichnet, daß**
das dieses ein Zwischenelement (7) nach einem der Ansprüche 1 bis 8 enthält.

## Claims

1. Intermediate element (7) for a shaft bearing, the shaft bearing having a bearing shell (5) which has one radial bearing surface (3) and two axial bearing surfaces (6) facing in opposite directions, **characterized in that** said intermediate element (7) has two wing elements (11) which can each be arranged underneath one axial bearing surface (6) of a bearing shell carrier (8).

2. Intermediate element (7) according to Claim 1, **characterized in that** said intermediate element (7) is made from a material which does not have an abrasive effect on the shaft (1) to be supported, in particular from a plastic.

3. Intermediate element (7) according to Claim 1 or 2, **characterized in that** the wing elements (11) are connected to each other by a bridging piece (9).

4. Intermediate element (7) according to Claim 3, **characterized in that** the wing elements (11) are inclined towards each other, starting from the bridging piece (9).

5. Intermediate element (7) according to one of Claims 1 to 4, **characterized in that** the wing elements (11) become thinner with increasing radial distance from the axis (A) of a shaft bearing.

6. Intermediate element (7) according to one of Claims 1 to 5, **characterized in that** said intermediate element (7) has support elements (10) which can support it on housing parts (12) of an internal combustion engine.

7. Intermediate element (7) according to one of Claims 1 to 6, **characterized in that** said intermediate element (7) has lubricant pockets (13) and/or lubricant grooves for the provision of a supply of lubricant and/or the distribution of lubricant.

8. Intermediate element (7) according to one of Claims 1 to 7, **characterized in that** said intermediate element (7) is dimensioned and configured for use on the crankshaft (1) of an internal combustion engine.

9. Shaft bearing having a bearing shell carrier (8), **characterized in that** said shaft bearing has an intermediate element (7) according to one of Claims 1 to 8.

## Revendications

1. Elément intermédiaire (7) pour un palier d'arbre, le palier d'arbre présentant une coque de palier (5) avec une surface de palier radiale (3) et deux surfaces de palier axiales (6) tournées dans des directions opposées,
**caractérisé en ce**
**qu'**il présente deux éléments d'ailes (11) qui peuvent être chacun disposés sous une surface de palier axiale (6) d'un support de coque de palier (8).

2. Elément intermédiaire (7) selon la revendication 1,
**caractérisé en ce**
**qu'**il se compose d'un matériau non abrasif pour l'arbre (1) à supporter, notamment d'un plastique.

3. Elément intermédiaire (7) selon la revendication 1 ou 2,
**caractérisé en ce que**
les éléments d'ailes (11) sont connectés l'un à l'autre par une nervure de connexion (9).

4. Elément intermédiaire (7) selon la revendication 3,
**caractérisé en ce que**
les éléments d'ailes (11) sont inclinés l'un par rapport à l'autre à partir de la nervure de connexion (9).

5. Elément intermédiaire (7) selon l'une quelconque des revendications 1 à 4,
**caractérisé en ce que**
les éléments d'ailes (11) deviennent de plus en plus minces au fur et à mesure de l'augmentation de la distance radiale à l'axe (A) d'un palier d'arbre.

6. Elément intermédiaire (7) selon l'une quelconque des revendications 1 à 5,
**caractérisé en ce**
**qu'**il contient des organes de support (10) qui peuvent le supporter sur des parties du boîtier (12) d'un moteur à combustion interne.

7. Elément intermédiaire (7) selon l'une quelconque des revendications 1 à 6,
**caractérisé en ce**
**qu'**il présente des cavités pour lubrifiant (13) et/ou des rainures pour lubrifiant pour le stockage et/ou la distribution de lubrifiant.

8. Elément intermédiaire (7) selon l'une quelconque des revendications 1 à 7,
**caractérisé en ce**
**qu'**il est dimensionné et prévu pour être utilisé sur le vilebrequin (1) d'un moteur à combustion interne.

9. Palier d'arbre comprenant un support de coque de palier (8),
**caractérisé en ce que**
celui-ci comprend un élément intermédiaire (7) selon l'une quelconque des revendications 1 à 8.
